# EUROPÄISCHE PATENTSCHRIFT

(11) **EP 3 433 460 B1**
(45) Veröffentlichungstag und Bekanntmachung des Hinweises auf die Patenterteilung: **26.02.2020**
(21) Anmeldenummer: 17713193.5
(22) Anmeldetag: 16.03.2017
(51) Int. Cl.: E05F 15/42

(54) **EXTRUSIONSPROFIL UND VERFAHREN ZUM HERSTELLEN DESSELBEN SOWIE TÜR FÜR EIN FAHRZEUG**
EXTRUSION PROFILE AND METHOD FOR PRODUCING THE SAME, AND DOOR FOR A VEHICLE
PROFILÉ EXTRUDÉ, PROCÉDÉ DE FABRICATION DE CELUI-CI ET PORTIÈRE POUR UN VÉHICULE

(30) Priorität: 21.03.2016 DE 102016105164
(43) Veröffentlichungstag der Anmeldung: 30.01.2019
(73) Patentinhaber: Knorr-Bremse GmbH, 2340 Mödling (AT)
(72) Erfinder: HIRTENLEHNER, Thomas, 3361 Aschbach (AT); ILLETSCHKO, Markus, 3323 Neustadtl (AT); JETZINGER, Peter, 4470 Enns (AT)
(74) Vertreter: Aurigium Leischner & Luthe
(86) Internationale Anmeldenummer: PCT/EP2017/056275
(87) Internationale Veröffentlichungsnummer: WO 2017/162519

(56) Entgegenhaltungen:
- EP-A2- 1 447 512
- WO-A1-00/57013
- DE-A1- 3 418 589
- DE-A1-102012 101 543
- DE-C1- 19 720 713

## Beschreibung

Die Erfindung geht aus von einer Vorrichtung und einem Verfahren nach Gattung der unabhängigen Ansprüche 1 und 11.

An einem Türspalt eines Fahrzeugs kann eine Klemmschutzeinrichtung angeordnet sein, um beispielsweise beim Einklemmen von Fingern in dem Türspalt Verletzungen zu vermeiden.

Die DE 10 2012 101543 A1 offenbart ein Herstellungsverfahren einer Fremdkörper-Erfassungsvorrichtung. Dabei wird ein elastischer Isolator gebildet, der einen Befestigungsabschnitt und einen inneren peripheren Abschnitt aufweist, auf dem eine Mehrzahl von Elektroden auf eine solche Art und Weise angeordnet sind, dass jede der Elektroden von den anderen entfernt liegt. Die EP 1 447512 A2 offenbart eine Sicherheitseinrichtung für Türen, wobei die Sicherheitseinrichtung einen Profilkörper aus elastomerem Material mit zumindest zwei entlang des Profilkörpers verlaufenden Hohlräumen aufweist, wobei in den Hohlräumen Schaltelemente vorgesehen sind. Die DE 197 20 713 C1 offenbart ein Dichtungsprofil zur Abdichtung einer kraftbetätigten Schließeinrichtung. Die WO 00/57013 A1 offenbart ein Dichtungsprofil zum Abdichten einer kraftbetätigten Schließeinrichtung mit einem Einklemmschutzbereich, der mindestens zwei zueinander beabstandete, elektrisch leitfähige Bereiche aufweist. Zur Verringerung des Platzbedarfs, des Gewichts und der Kosten wird ein Carrier als metallischer Leiter für einen der Bereiche zur Verringerung des Durchgangswiderstands genutzt.

Vor diesem Hintergrund werden mit dem hier vorgestellten Ansatz ein alternatives Extrusionsprofil aus einem Elastomermaterial und ein Verfahren zum Herstellen eines Extrusionsprofils mit verbessertem Vandalismusschutz sowie eine Tür für ein Fahrzeug mit einem erfindungsgemäßen Extrusionsprofil vorgestellt.

Ein Einklemmen im Türspalt kann durch eine Erkennungseinrichtung erkannt werden, die in einer Klemmschutzeinrichtung integriert ist. Zumindest Teile der Erkennungseinrichtung können unmittelbar in einen Türgummi der Klemmschutzeinrichtung integriert sein. Dadurch können der Türgummi und die integrierten Teile zusammen auf Länge geschnitten werden.

Dadurch ergibt sich eine integrale Bauweise, die eine Reduktion von Bauteilen ermöglicht, da mehrere Funktionen, wie der Einklemmschutz, die Einklemmerkennung und der "Einklemmschmerz" in einem Bauteil verschmolzen sind. Es ergibt sich ein einfaches Funktionsprinzip durch ein abgekapseltes wartungsfreies System, das unempfindlich gegen äußere Einflüsse ist. Eine Auswertung mit bestehenden Türsteuerungen ist möglich. Ein Funktionsausfall kann detektiert werden und in bestimmten Ausführungsvarianten ergibt sich eine erhöhte Vandalismus-Sicherheit.

Es wird ein Extrusionsprofil für eine Tür für ein Fahrzeug vorgestellt, wobei das Extrusionsprofil aus einem Elastomermaterial mit zumindest einem durchgehenden Schaltelement für eine Detektionseinrichtung zum Detektieren einer Kompression des Extrusionsprofils und einer durchgehenden Schnittschutzeinrichtung gefertigt ist, wobei das Schaltelement und die Schnittschutzeinrichtung in das Extrusionsprofil integriert ist und mit dem Extrusionsprofil ablängbar ist, wobei die Schnittschutzeinrichtung ein parallel zu dem zumindest einen Schaltelement ausgerichtetes, in das Elastomermaterial eingebettetes Schnittschutzelement aufweist, und wobei das Schnittschutzelement in Bezug auf eine angenommene Schnittrichtung vor dem Schaltelement angeordnet ist, um das Schaltelement zu schützen.

Unter einem Fahrzeug kann beispielsweise ein Fahrzeug zur Personenbeförderung verstanden werden. Dabei kann es sich um ein Schienenfahrzeug oder ein Straßenfahrzeug handeln. Zudem kann das Extrusionsprofil auch bei anderen Anwendungsgebieten eingesetzt werden, bei denen das Erkennen eines Einklemmens oder einer Verformung, beispielsweise bei einem Schließvorgang, von Interesse ist. Unter einem Extrusionsprofil kann ein theoretisch mit unendlicher Länge herstellbarer Strang mit gleichbleibender Querschnittsfläche verstanden werden. Ein Elastomermaterial kann elastische Materialeigenschaften aufweisen. Beispielsweise kann das Elastomermaterial Gummi oder ein geeigneter Kunststoff sein. Ein Schaltelement kann dazu ausgebildet sein, unter Verwendung eines Gegenstücks, welches auch ein gleichartiges Schaltelement sein kann, eine Kompression des Extrusionsprofils in einem Signal abzubilden. Das Schaltelement kann ebenso wie das Extrusionsprofil theoretisch endlos ausgeführt werden. Eine Detektionseinrichtung kann elektrische Komponenten zum Betreiben des Schaltelements aufweisen. Eine Schnittschutzeinrichtung kann als Vandalismusschutzeinrichtung bezeichnet werden. Die Schutzeinrichtung ist benachbart zu dem zumindest einen Schaltelement angeordnet. Die Schnittschutzeinrichtung ist mit dem Extrusionsprofil ablängbar. Die Schnittschutzeinrichtung kann unempfindlich gegen Schnitte ausgeformt sein. Durch die Schnittschutzeinrichtung weist das Extrusionsprofil eine erhöhte Vandalismussicherheit auf.

Das Schaltelement kann ein in einer Haupterstreckungsrichtung des Extrusionsprofils ausgerichtetes optisches Reflektorelement sein. Ein Reflektorelement kann ein reflektierender schlauchförmiger Hohlraum sein. Eine Oberfläche des Hohlraums kann glatt und/oder spiegelnd sein. Dadurch kann das Reflektorelement auch auf gebogene Profile angewendet werden. Ein Reflektor kann beispielsweise durch Extrusion über eine Eigenschaft des Materials selbst hergestellt werden. Ebenso kann der Reflektor nachträglich aufgedampft werden. Das Reflektorelement kann mit einem Sender und einen Empfänger gekoppelt werden. Durch eine Kompression des Reflektorelements, die durch eine Kompression des Extrusionsprofils hervorgerufen werden kann, wird eine Dämpfung des Reflektorelements beziehungsweise ein Verlust einer durch das Reflektorelement geleiteten Strahlung erhöht und am Empfänger kann eine entsprechende Veränderung detektiert und ausgewertet werden.

Das Schaltelement kann ein in der Haupterstreckungsrichtung ausgerichteter Lichtleiter sein. Ein Lichtleiter, auch Lichtwellenleiter genannt, reflektiert Licht über eine Totalreflexion an einer Grenzfläche des Lichtwellenleiters. Der Lichtleiter kann entsprechend zu dem Reflektorelement mit einem Sender und einem Empfänger ergänzt werden. Durch eine Biegung oder Kompression des Lichtleiters, welche durch Kompression des Extrusionsprofils hervorgerufen werden kann, wird die Dämpfung beziehungsweise der Verlust einer durch das Reflektorelement geleiteten Strahlung erhöht und am Empfänger kann eine entsprechende Veränderung detektiert und ausgewertet werden.

Das Schaltelement kann anschließend an das Extrudieren in das Extrusionsprofil eingebracht sein. Beispielsweise kann das Schaltelement aufgedampft werden. Durch das nachträgliche Integrieren des Schaltelements können Materialien verwendet werden, die nicht extrudierbar sind. Ebenso kann ein erstes Schaltelement extrudiert werden und ein zweites Schaltelement anschließend eingebracht werden.

Das Schaltelement kann in das Elastomermaterial eingebettet sein. Das Schaltelement kann extrudiert sein. Das zumindest eine Schaltelement kann zusammen mit dem Elastomermaterial aus einer konturierten Düse extrudiert werden. Dadurch kann eine sichere Verbindung zwischen dem Schaltelement und dem Elastomermaterial erreicht werden und es ist kein separater Herstellungsschritt zum Kombinieren des zumindest einen Schaltelements und des Extrusionsprofils erforderlich.

Das Schaltelement kann ein Tauchanker zum Eintauchen in eine Spuleneinrichtung sein. Der Tauchanker kann dazu ausgeformt sein, beim Eintauchen in die Spuleneinrichtung ein Magnetfeld der Spuleneinrichtung zu beeinflussen. Eine entsprechende Eintauchbewegung kann durch eine Kompression des Extrusionsprofils hervorgerufen werden. Der Tauchanker kann aus einem weichmagnetischen Werkstoff gefertigt sein. Beispielsweise kann der Tauchanker elektrisch leitend sein. Das Schaltelement ändert den magnetischen Widerstand des Magnetkreises. Das Schaltelement kann quer zu einer Spulenebenen der Spuleneinrichtung beweglich gelagert sein. Die Spuleneinrichtung kann gemäß einer Ausführungsform in das Extrusionsprofil integriert sein. Beispielsweise können Teilwicklungen der Spuleneinrichtung in das Elastomermaterial integriert sein und mit dem Extrusionsprofil abgelängt werden. Anschließend können die Teilwicklungen an den Schnittkanten des Extrusionsprofils elektrisch leitend miteinander verbunden werden, um eine elektrische Spule auszubilden. Die Spule kann auch nach dem Extrusionsprozess angebracht werden.

Die Detektionseinrichtung kann zwei Schaltelemente in Form von zwei in einer Haupterstreckungsrichtung des Extrusionsprofils ausgerichteten elektrischen Leitern aufweisen. Die Leiter können durch einen komprimierbaren Zwischenraum voneinander beabstandet sein. Ein Zwischenraum kann als Spalt bezeichnet werden. Die Leiter können Kontaktflächen aufweisen, über die bei einer Kompression des Zwischenraums ein Stromfluss zwischen den Leitern erfolgen kann. Durch den elektrischen Kontakt zwischen zwei Leitern kann die Kompression einfach erfasst werden. Gemäß unterschiedlichen Ausführungsbeispielen kann ein entsprechender elektrischer Leiter beispielsweise aus Metall und/oder aus einem elektrisch leitfähigen Elastomermaterial ausgeformt sein. Ein elektrisch leitfähiges Elastomermaterial kann beispielsweise ein mit elektrisch leitfähigen Partikeln durchsetztes Elastomermaterial sein. Es kann auch ein metallischer Leiter in einem elektrisch leitenden Elastomer eingebettet sein.

Die Schnittschutzeinrichtung weist ein parallel zu dem Schaltelement ausgerichtetes, in das Elastomermaterial eingebettetes Schnittschutzelement auf. Das Schnittschutzelement kann metallisch, beispielsweise ein Metallband oder ein Metallnetz sein. Ebenso kann das Schnittschutzelement aus einem faserverstärkten Kunststoffmaterial, wie beispielsweise GFK oder CFK sein. Das Schnittschutzelement kann auch ein textiles Schnittschutzmaterial sein. Das Schnittschutzelement kann so ausgerichtet sein, dass die Grundfunktion des Einklemmschutzes beziehungsweise der Einklemmerkennung des Schaltelements weiterhin gegeben ist. Das Schnittschutzelement kann extrudiert sein. Das Schnittschutzelement ist in Bezug auf eine angenommene Schnittrichtung vor dem Schaltelement angeordnet, um das Schaltelement zu schützen.

Das Schaltelement kann in einem Befestigungsbereich des Extrusionsprofils angeordnet sein. Der Befestigungsbereich kann vorgesehen sein, um das Extrusionsprofil beispielsweise an einem Türblatt zu befestigen. Dazu kann der Befestigungsbereich in eine Aufnahmeeinrichtung, beispielsweise eine Aufnahmekontur des Türblatts, eingefügt werden. Bei einer geeigneten Ausformung der Aufnahmeeinrichtung kann der Befestigungsbereich im montierten Zustand schnittgeschützt angeordnet sein. Durch die Position des zumindest einen Schaltelements im Befestigungsbereich ist das Schaltelement sehr gut vor Vandalismus geschützt.

Das Extrusionsprofil kann eine Übertragungseinrichtung aufweisen. Die Übertragungseinrichtung kann zwischen einer Berührfläche des Extrusionsprofils und dem Schaltelement angeordnet sein. Die Übertragungseinrichtung kann dazu ausgebildet sein, eine Verformung der Berührfläche auf das Schaltelement zu übertragen. Unter der Berührfläche kann eine Außenfläche des Extrusionsprofils verstanden werden, die im Falle eines Einklemmvorgangs verformt wird. Die Übertragungseinrichtung ermöglicht eine genaue Erfassung der Verformung, auch wenn das zumindest eine Schaltelement auf einer von der Berührfläche entfernten Seite des Extrusionsprofils angeordnet ist.

Eine solche Übertragungseinrichtung kann eine mechanische Struktur aufweisen, die in einer Übertragungsrichtung von der Berührungsfläche zu dem zumindest einen Schaltelement eine vorbestimmte Steifigkeit aufweist. Die Steifigkeit charakterisiert dabei, wie weit das Schaltelement bei einem Druck auf die Berührfläche verformt wird. Beispielsweise kann durch die Übertragungseinrichtung ein Übersetzungsverhältnis zwischen einer durch eine Deformation hervorgerufenen Auslenkung eines Abschnitts der Berührfläche und einer Auslenkung eines auf Höhe des Abschnitts der Berührfläche liegenden Abschnitts eines Schaltelements definiert werden. Auch kann die mechanische Struktur beispielsweise so ausgeformt sein, dass eine Beschädigung des Schaltelements bei einer starken Deformation des Extrusionsprofils verhindert wird.

Eine Tür für ein Fahrzeug umfasst ein Türblatt und ein an einer Kante des Türblatts angeordnetes erfindungsgemäßes Extrusionsprofil. Auf diese Weise kann das Extrusionsprofil vorteilhaft im Zusammenhang mit einer Tür eingesetzt werden. Alternativ oder zusätzlich zu einer Anordnung des Extrusionsprofils kann das Extrusionsprofil beispielsweise auch an einem Türrahmen angeordnet sein. Das Extrusionsprofil kann als Bestandteil der Tür aufgefasst werden.

Weiterhin wird ein Verfahren zum Herstellen eines erfindungsgemäßen Extrusionsprofils vorgestellt, wobei das Verfahren die folgenden Schritte aufweist:

Extrudieren des Elastomermaterials zu dem Extrusionsprofil; und Integrieren des Schaltelements und der Schnittschutzeinrichtung in das Extrusionsprofil, wobei die Schnittschutzeinrichtung ein parallel zu dem zumindest einen Schaltelement ausgerichtetes Schnittschutzelement aufweist, das in das Elastomermaterial eingebettet wird, und wobei das Schnittschutzelement in Bezug auf eine angenommene Schnittrichtung vor dem Schaltelement angeordnet wird, um das Schaltelement zu schützen.

Die Schritte des Extrudierens und des Integrierens können zeitgleich ausgeführt werden. Zumindest ein Schaltelement und/oder die Schnittschutzeinrichtung kann zeitgleich mit dem Elastomermaterial extrudiert werden. Durch ein zeitgleiches Extrudieren und Integrieren kann das Extrusionsprofil einfach und schnell hergestellt werden. Es kann auch beides integriert sein.

Das Schaltelement und/oder ein weiteres Schaltelement kann auf das Elastomermaterial aufgedampft werden. Durch ein Aufdampfen kann eine geringe Schichtdicke erreicht werden.

Das Verfahren kann einen Schritt des Ablängens des Extrusionsprofils auf eine gewünschte Länge aufweisen. Dabei kann das zumindest eine Schaltelement und/oder die Schnittschutzeinrichtung zeitgleich und in einem Arbeitsschritt mit dem Extrusionsprofil auf die Länge abgelängt werden. Das Ablängen kann beispielsweise kurz nach einer Extrudierdüse erfolgen.

Ausführungsbeispiele des hier vorgestellten Ansatzes sind in den Zeichnungen dargestellt und in der nachfolgenden Beschreibung näher erläutert. Es zeigt:
- Fig. 1: eine Schnittdarstellung durch ein montiertes Extrusionsprofil gemäß einem Ausführungsbeispiel;
- Fig. 2: eine räumliche Darstellung eines Extrusionsprofils gemäß einem Ausführungsbeispiel;
- Fig. 3: eine Schnittdarstellung durch ein Extrusionsprofil mit einer Schnittschutzeinrichtung gemäß einem Ausführungsbeispiel;
- Fig. 4: eine Schnittdarstellung durch ein verstärktes Extrusionsprofil gemäß einem Ausführungsbeispiel;
- Fig. 5: eine Schnittdarstellung durch ein Extrusionsprofil mit geschützten Schaltelementen gemäß einem Ausführungsbeispiel;
- Fig. 6: ein Ablaufdiagramm eines Verfahrens zum Herstellen eines Extrusionsprofils gemäß einem Ausführungsbeispiel;
- Fig. 7: eine schematische Darstellung eines Fahrzeugs mit einem Extrusionsprofil gemäß einem Ausführungsbeispiel;
- Fig. 8: eine Schnittdarstellung durch ein Extrusionsprofil mit einem als Tauchanker ausgebildeten Schaltelement gemäß einem Ausführungsbeispiel;
- Fig. 9: eine Schnittdarstellung durch ein Extrusionsprofil mit schräg angeordneten Schaltelementen gemäß einem Ausführungsbeispiel;
- Fig. 10: eine Schnittdarstellung durch ein Extrusionsprofil mit einem Lichtleiter als Schaltelement gemäß einem Ausführungsbeispiel; und
- Fig. 11: eine Schnittdarstellung durch ein Extrusionsprofil mit unterschiedlichen Schaltelementen gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

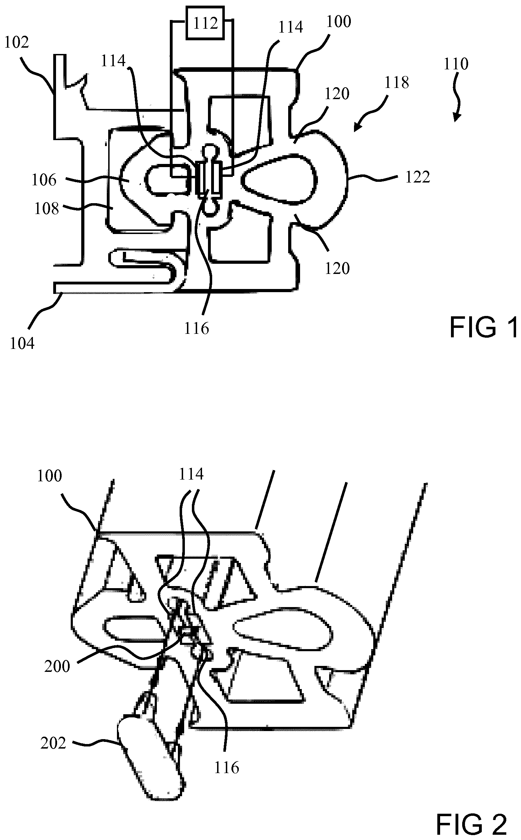

Fig. 1 zeigt eine Schnittdarstellung durch ein montiertes Extrusionsprofil 100 gemäß einem Ausführungsbeispiel. Das Extrusionsprofil 100 ist verformbar und besteht aus einem dauerelastischen Elastomermaterial. Das Extrusionsprofil 100 ist mit einem Montageprofil 102 einer Türe 104 eines Fahrzeugs verbunden. Das Montageprofil 102 kann als TFL-Profil bezeichnet werden. Das Fahrzeug ist beispielsweise ein Schienenfahrzeug und die Türe 104 eine Schiebetüre des Schienenfahrzeugs. Ein pfeilförmiger Montagebereich 106 des Extrusionsprofils 100 ist in einer T-Nut 108 des Montageprofils 102 eingerastet.

Das Extrusionsprofil 100 kann als Klemmschutzprofil 100 für einen Türspalt 110 der Türe 104 bezeichnet werden. Das Fahrzeug weist gemäß einem Ausführungsbeispiel eine Detektionseinrichtung 112 beziehungsweise Detektionseinheit 112 zum Detektieren eines Einklemmens eines Gegenstands in dem Türspalt 110 auf. Dazu sind in das Extrusionsprofil 100 gemäß diesem Ausführungsbeispiel beispielhaft zwei in Extrusionsrichtung durchgehende Schaltelemente 114 eingebettet, die über Schnittstellen signalübertragungsfähig mit der Detektionseinrichtung 112 verbunden sind. Die Schaltelemente 114 sind durch einen quer zu einer Detektionsrichtung ausgerichteten Zwischenraum 116 beziehungsweise einen Spalt 116 voneinander beabstandet. Die Detektionseinrichtung 112 ist gemäß einem Ausführungsbeispiel ausgebildet, um zu detektieren, wenn sich die beiden Schaltelemente 114 einander annähern oder berühren. Beispielsweise kann die Detektionseinrichtung 112 ausgebildet sein, um eine solche Annäherung oder Berührung, die aus einer Verformung des Extrusionsprofils 100 bei einem Einklemmvorgang resultieren kann, über eine Strommessung, kapazitive oder induktive Messung zu detektieren.

Gemäß einem Ausführungsbeispiel wird bei einem Einklemmvorgang die auf eine Außenseite des Extrusionsprofils 100 wirkende Verformung durch eine Übertragungseinrichtung 118 des Extrusionsprofils 100 auf eines der Schaltelemente 114 übertragen. Die Übertragungseinrichtung 118 weist dazu eine geeignete mechanische Struktur, hier beispielsweise zwei V-förmig angeordnete Rippen 120 auf, die eine bogenförmig hervorstehende Berührfläche 122 des Extrusionsprofils 100 mit dem Elastomermaterial im Bereich des Schaltelements 114 verbinden. Hier ist das Profil 100 derart gestaltet, dass der Weg beziehungsweise die Verformung des Gummis an der eine Vorderkante des Extrusionsprofils 100 ausformenden Berührfläche 122 mit einem geeigneten Übersetzungsverhältnis übertragen wird, sodass damit die Empfindlichkeit des zumindest einen Schaltelements 114 eingestellt beziehungsweise gesteuert werden kann.

Die Schaltelemente 114 weisen beispielsweise ein elektrisch leitendes Material auf, sodass bei einer Berührung der Schaltelemente ein elektrischer Kontakt hergestellt wird. Die Detektionseinrichtung 112 registriert einen resultierenden Stromfluss und kann ein Einklemmsignal bereitstellen, beispielsweise um einen Antrieb der Türe 104 anzuhalten.

In einem Ausführungsbeispiel sind die Schaltelemente 114 Bänder aus Metall, insbesondere aus Edelstahl. Die Bänder 114 sind mit dem Elastomermaterial extrudiert. Beim Extrudieren verbindet sich das Elastomermaterial fest mit dem Metall. Durch die Bänder 114 aus Metall können die Schaltelemente 114 nur schwer beschädigt werden. Dadurch ist das Klemmschutzprofil 100 beispielsweise gegen Vandalismus geschützt.

Mit anderen Worten zeigt Fig. 1 am Beispiel eines Querschnitts eines Extrusionsprofils 100 mit integrierter Detektierung in Form eines integrierten Einklemmschutzes oder integrierter Einklemmerkennung bei Einstiegssystemen. Im Gegensatz zu bisherigen Detektionsmöglichkeiten für Einklemmschutz, bei dem die Sensorik, wie beispielsweise eine Schaltleiste, nach der Extrusion des Fingerschutzprofils eingebaut wird, sind bei dem hier vorgestellten Ansatz die Schaltelemente 114, wie ein elektrischer Schalter oder Lichtwellenleiter bereits direkt in das Profil 100 integriert beziehungsweise mitextrudiert.

**Fig. 2** zeigt eine räumliche Darstellung eines Extrusionsprofils 100 gemäß einem Ausführungsbeispiel. Das Extrusionsprofil 100 entspricht im Wesentlichen dem Extrusionsprofil in Fig. 1. Es ist eine Schnittfläche des Extrusionsprofils 100 quer zu einer Haupterstreckungsrichtung des Extrusionsprofils 100 dargestellt. An der Schnittfläche ist das Extrusionsprofil 100 von einem Endlosstrang abgelängt worden. Beim Ablängen sind auch die vor dem Ablängen in das Extrusionsprofil 100 integrierten Schaltelemente 114 durchtrennt worden. Damit ist die Schnittfläche des Elastomermaterials auch eine Schnittfläche der Schaltelemente 114.

Die Schaltelemente 114 sind hier elektrisch leitend. Zusätzlich ist hier ein Abschlusswiderstand 200 dargestellt, der die Schaltelemente 114 elektrisch miteinander verbindet. Über den Abschlusswiderstand 200 kann ein definierter Ruhestrom durch die Schaltelemente 114 fließen. Wenn kein Ruhestrom fließt, ist der Stromkreis unterbrochen, was auf einen Defekt, wie einen Leitungsbruch oder eine Beschädigung zumindest eines der Schaltelemente hindeutet. Auf diese Weise kann ein Leitungsbruch bei der integrierten elektrischen Schaltleiste 114 mithilfe des Ruhestromprinzips erkannt werden. Aus diesem Grund wird gemäß einem Ausführungsbeispiel der in einer geeigneten Größe ausgeführte Abschlusswiderstand 200 angebracht.

Weiterhin ist eine Endkappe 202 dargestellt, die ausgeformt ist, um den Zwischenraum 116 zwischen den Schaltelementen 114 an der Schnittstelle zu verschließen. Die Endkappe 202 weist zwei angefaste Zapfen auf, die in beidseitig des Zwischenraums 116 in dem Extrusionsprofil 100 ausgebildete zylindrische Kanäle eingesteckt werden. Die Endkappe 202 kann auch mit dem Elastomermaterial verklebt oder verschweißt werden.

Nach der Extrusion wird das entstehende Endlosmaterial je nach Bedarf in der gewünschten Länge abgeschnitten und die elektrischen beziehungsweise optischen Anschlüsse werden angebracht. Hier ist beispielsweise der Abschlusswiderstand 200 zur Funktionsüberwachung angebracht. In einem weiteren Schritt kann das auch als System bezeichnete Extrusionsprofil 100, um den Eintritt von Feuchtigkeit zu vermeiden, an einer oder beiden Enden durch die Endkappe 202, auch als Stopfen bezeichnet, abgekapselt werden. Die Abkapselung erfolgt gemäß einem Ausführungsbeispiel dadurch, dass die Endkappe 202 eingeklebt oder angespritzt wird.

Die gemäß einem Ausführungsbeispiel mitextrudierten Schaltelemente 114 in Form von elektrisch leitenden Streifen bestehen aus elektrisch leitenden Materialien. Beispielsweise können die Schaltelemente 114 aus Metall sein, wobei Edelstahl bezüglich der Langzeitbeständigkeit von Vorteil ist. Ebenso können die Schaltelemente 114 aus einem Elastomer sein. Der Elastomer kann in Kombination mit Metalldrähten extrudiert werden.

Anstelle der elektrisch leitenden Streifen kann auch ein Schaltelement 114 in Form eines Lichtwellenleiters und zusätzlich oder alternativ ein Schaltelement 114 in Form eines Reflektors 114, einer Schaltleiste oder eines Bandschalter mitextrudiert werden.

In einem Ausführungsbeispiel sind die Schaltelemente 114 optische Schaltelemente 114. Dabei weist eines der Schaltelemente 114 einen Lichtleiter und das andere Schaltelement 114 einen Reflektor auf. Der Lichtleiter ist mit dem Elastomermaterial extrudiert. Der Reflektor ist nach dem Extrudieren aufgedampft.

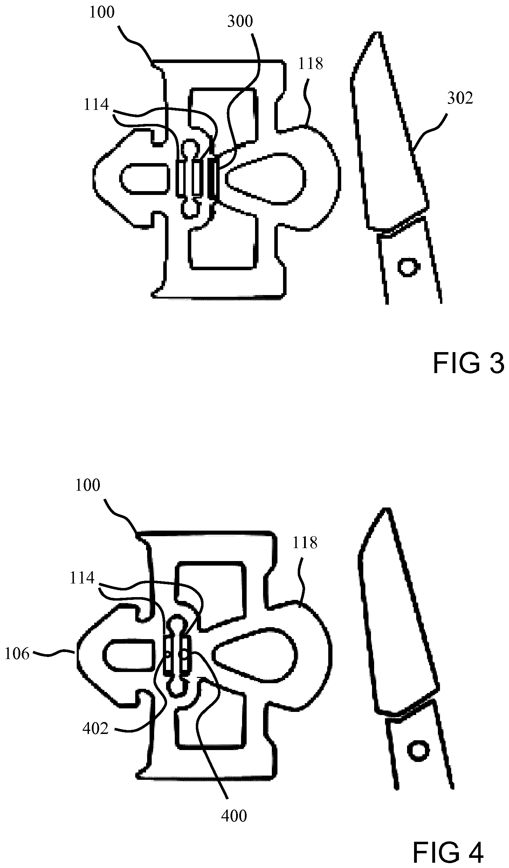

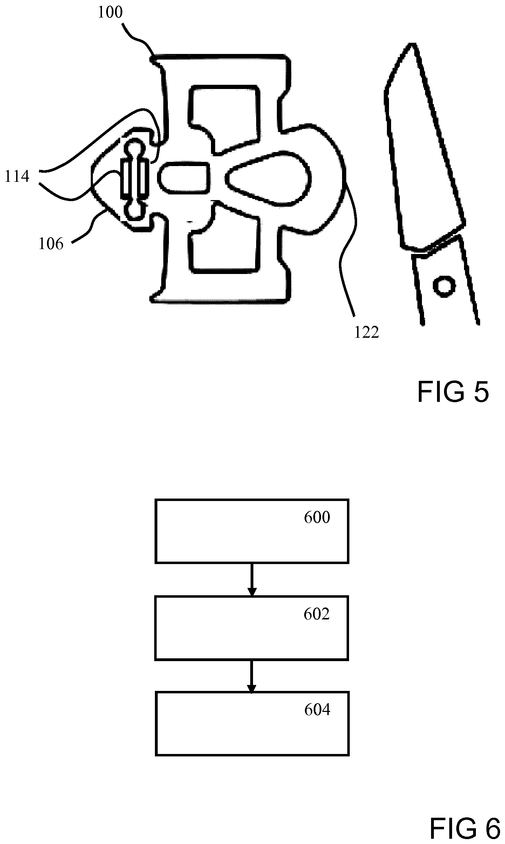

Um die Vandalismus-Sicherheit der auf dem zumindest einen Schaltelement 114 basierenden Sensorik zu erhöhen, stehen unterschiedliche Möglichkeiten zur Verfügung. Beispielsweise kann, wie nachfolgend anhand von Fig. 3 beschrieben, ein Metallstreifen oder Ähnliches oder wie nachfolgend anhand von Fig. 4 beschrieben, ein ausreichend dicker metallischer Draht bei Elastomerstreifen mitextrudiert werden. Bei Elastomerstreifen kann der Schutz wie in Fig. 3 durch eine zusätzliche Einlage erhöht werden. Ebenso kann die Detektionseinheit 114 wie in Fig. 5 in das Türflügelprofil verschoben werden.

**Fig. 3** zeigt eine Schnittdarstellung durch ein Extrusionsprofil 100 mit einer Schnittschutzeinrichtung 300 gemäß einem Ausführungsbeispiel. Das Extrusionsprofil 100 entspricht im Wesentlichen den Extrusionsprofilen in den Figuren 1 und 2. Zusätzlich ist hier zwischen der Übertragungseinrichtung 118 und dem Bereich der Schaltelemente 114 eine zusätzliche metallische oder ähnliche Einlage als Schnittschutzeinrichtung 300 in das Elastomermaterial integriert. Die Schnittschutzeinrichtung 300 ist in Form eines Metallbands mit dem Elastomermaterial zu dem endlosen Extrusionsprofil 100 extrudiert worden.

Das hier dargestellte Extrusionsprofil 100 weist einen erhöhten Vandalismus-Schutz auf. Beispielsweise sind die hier als Schaltleisten ausgeführten Schaltelemente 114 durch die Schnittschutzeinrichtung 300 geschützt, wenn ein Messer 302 den Fingerschutzgummi des Extrusionsprofils 100 durchschneidet. Dadurch ist die Funktion der Einklemmerkennung auch bei einer tief greifenden Beschädigung des Extrusionsprofils 100 weiter gegeben.

**Fig. 4** zeigt eine Schnittdarstellung durch ein verstärktes Extrusionsprofil 100 gemäß einem Ausführungsbeispiel. Das Extrusionsprofil 100 entspricht im Wesentlichen den Extrusionsprofilen in den Figuren 1 und 2. Die Schaltelemente 114 sind hier aus elektrisch leitendem Elastomermaterial extrudiert. Zusätzlich sind hier verstärkende, elektrisch leitende Metalldrähte 400, 402 in die Schaltelemente 114 integriert. Die Metalldrähte 400, 402 sind unterschiedlich dick. Der Metalldraht 400, der in dem der Übertragungseinrichtung 118 zugewandten Schaltelement 114 angeordnet ist, ist dicker, als der Metalldraht 402, der dem Befestigungsbereich 106 zugewandt ist.

**Fig. 5** zeigt eine Schnittdarstellung durch ein Extrusionsprofil 100 mit geschützten Schaltelementen 114 gemäß einem Ausführungsbeispiel. Eine Außenkontur des Extrusionsprofils 100 entspricht im Wesentlichen einem der in den Figuren 1 bis 4 dargestellten Extrusionsprofilen. Im Gegensatz dazu sind die Schaltelemente 114 hier im Inneren des Befestigungsbereichs 106 und damit in einem sicheren Bereich angeordnet. Im verbauten Zustand ist der Befestigungsbereich 106 wie in Fig. 1 gezeigt, in einer T-Nut angeordnet und damit an drei Seiten von Metall umschlossen. Das Montageprofil ist schnittresistent. Daher ist das hier dargestellte Extrusionsprofil 100 sehr gut gegen Vandalismus beziehungsweise Schnitte geschützt.

Der Befestigungsbereich 106 ist gemäß diesem Ausführungsbeispiel ein sich aus einer der Berührungsfläche 122 gegenüberliegenden Seite des Extrusionsprofils 100 hervorstehender Fortsatz des Extrusionsprofils 100. Der Befestigungsbereich 106 weist zwei einander gegenüberliegende Rasthaken auf, die ein Festklemmen des Extrusionsprofils 100 in dem Montageprofil ermöglichen.

**Fig. 6** zeigt ein Ablaufdiagramm eines Verfahrens zum Herstellen eines Extrusionsprofils gemäß einem Ausführungsbeispiel. Durch das Verfahren kann ein Extrusionsprofil, wie es in den Figuren 1 bis 5 dargestellt ist, hergestellt werden. Das Verfahren weist einen Schritt 600 des Extrudierens und einen Schritt 602 des Integrierens auf. Im Schritt 600 des Extrudierens wird ein Elastomermaterial durch eine Düse eines Extruders zu dem Extrusionsprofil extrudiert. Im Schritt 602 des Integrierens wird zumindest ein Schaltelement in das Extrusionsprofil integriert.

In einem Ausführungsbeispiel wird das Schaltelement während des Extrudierens 600 in das Elastomermaterial eingebettet. Dazu tritt das Schaltelement als Endlosmaterial oder Rollenmaterial mit dem Elastomermaterial aus der Düse des Extruders aus.

Alternativ kann auch ein elektrischer Leiter oder ein Reflektor in einem weiteren Herstell-Prozessschritt aufgetragen werden. Der Leiter oder Reflektor kann beispielsweise aufgedampft werden.

In einem Ausführungsbeispiel wird das extrudierte Endlosmaterial in einem Schritt 604 des Ablängens nach dem Schritt 600 des Extrudierens und dem Schritt 602 des Integrierens auf Stücke mit einer gewünschten Länge abgelängt. Dabei werden das Elastomermaterial und das zumindest eine Schaltelement an einer Schnittfläche durch eine Ablängeinrichtung durchtrennt.

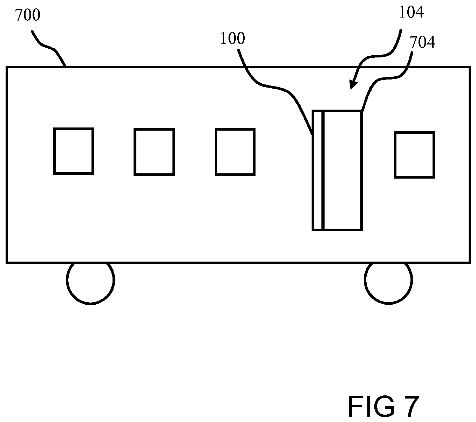

**Fig. 7** zeigt eine schematische Darstellung eines Fahrzeugs 700, hier beispielsweise eines Schienenfahrzeugs, gemäß einem Ausführungsbeispiel. Das Fahrzeug 700 weist eine Tür 104 auf, deren Türblatt 704 entlang einer Kante mit einem Einklemmschutz in Form eines Türgummis versehen ist, der als ein Extrusionsprofil 100 ausgeführt ist, wie es anhand der vorangegangenen Figuren beschriebenen ist.

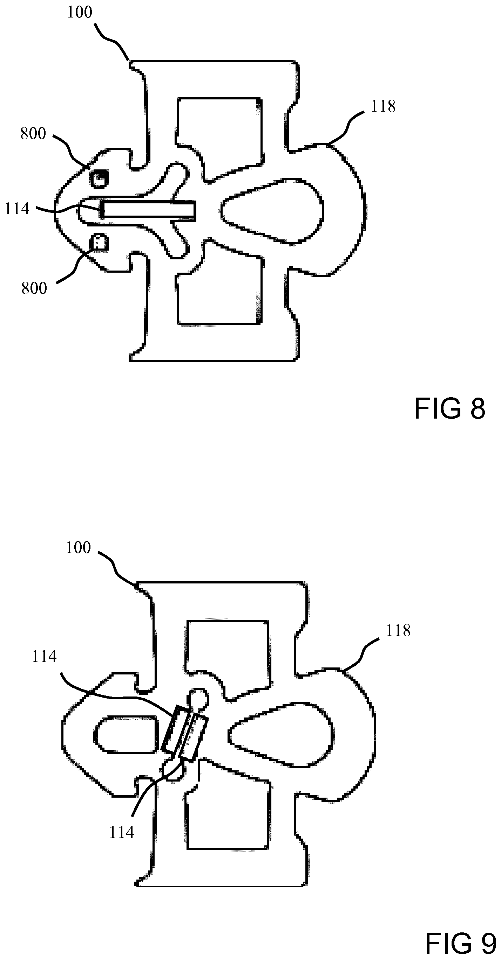

**Fig. 8** zeigt eine Schnittdarstellung durch ein Extrusionsprofil 100 mit einem als Tauchanker ausgebildeten Schaltelement 114 gemäß einem Ausführungsbeispiel. Eine Außenkontur des Extrusionsprofils 100 entspricht im Wesentlichen einem der in den Figuren 1 bis 5 dargestellten Extrusionsprofilen. Im Gegensatz dazu ist in dem Befestigungsbereich 106 eine elektrische Spule 800 in das Elastomermaterial integriert. Der Tauchanker 114 ist als Streifen mit dem Elastomermaterial extrudiert. Der Tauchanker 114 ist mit der Übertragungseinrichtung 118 gekoppelt und im Wesentlichen in einer bei einer Kompression des Extrusionsprofils 100 erwarteten Bewegungsrichtung ausgerichtet. Der Tauchanker 114 ragt in einen Hohlraum des Extrusionsprofils 100 hinein. Innerhalb des Hohlraums ist der Tauchanker 114 in der Bewegungsrichtung beweglich.

Die Spule 800 ist aus zwei mitextrudierten Teilwicklungen zusammengesetzt. Die Teilwicklungen sind beidseitig des Tauchankers 114 angeordnet und mit dem Elastomermaterial und dem Tauchanker 114 abgelängt worden. An den Schnittflächen sind die Teilwicklungen elektrisch miteinander verbunden worden, um die Spule 800 auszubilden. Eine Spulenebene der Spule 800 ist quer beziehungsweise senkrecht zu der Bewegungsrichtung des Tauchankers 114 ausgerichtet.

Wenn der Tauchanker 114 relativ zu der Spule 800 bewegt wird beziehungsweise in sie eintaucht, ändert sich eine Induktivität der Spule 800. Die Induktivität wird erfasst. Die Änderung der Induktivität signalisiert eine Verformung des Extrusionsprofils 100.

In einem nicht dargestellten Ausführungsbeispiel ist die Spule 800 nicht in dem in dem Extrusionsprofil 100, sondern in dem Montageprofil der Türe angeordnet. Dadurch kann auf eine elektrische Verbindung des Extrusionsprofils 100 zu der Detektionseinrichtung verzichtet werden.

Mit anderen Worten zeigt Fig. 8 ein Extrusionsprofil 100 zur induktiven Detektierung. Bei Einklemmung taucht der mit dem hier als Fingerschutzprofil ausgeführten Extrusionsprofil 100 mitextrudierter Metallstreifen 114 in die Spule 800 ein. Die dadurch entstehende Änderung des magnetischen Feldes wird mit einer geeigneten Einrichtung ausgewertet, wodurch eine Einklemmung detektiert werden kann.

Die Spule 800 kann auch nach Abschneiden des extrudierten Profils 100 angebracht werden. Es ist nicht erforderlich die Spule 800 am Fingerschutzprofil 100 aufzuwickeln, sondern kann auch am Türflügelprofil angebracht werden.

**Fig. 9** zeigt eine Schnittdarstellung durch ein Extrusionsprofil 100 mit schräg angeordneten Schaltelementen 114 gemäß einem Ausführungsbeispiel. Das Extrusionsprofil 100 entspricht im Wesentlichen dem in Fig. 1 dargestellten Extrusionsprofil. Im Gegensatz dazu sind die beiden Schaltelemente 114 hier in einem Winkel zu der erwarteten Bewegungsrichtung der Übertragungseinrichtung 118 bei einer Kompression des Extrusionsprofils 100 angeordnet. Dabei ist die Anordnung des Schaltelements 114 beliebig.

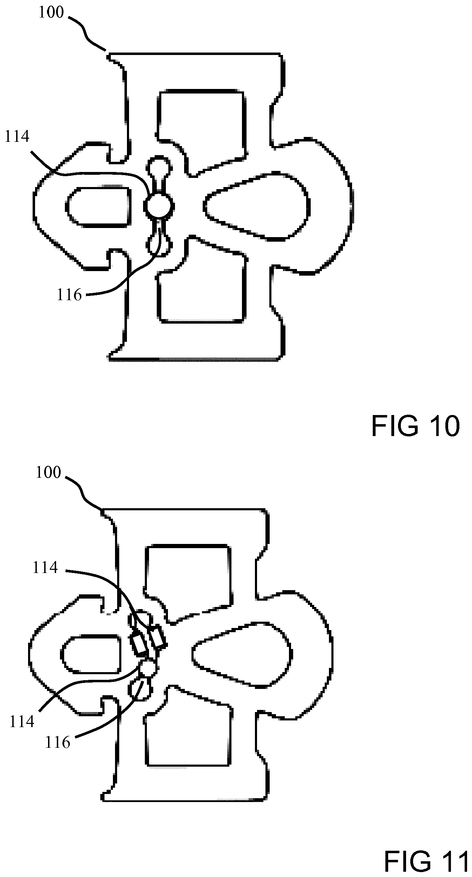

**Fig. 10** zeigt eine Schnittdarstellung durch ein Extrusionsprofil 100 mit einem Lichtleiter 114 als Schaltelement gemäß einem Ausführungsbeispiel. Der Lichtleiter 114 ist mit dem Elastomermaterial extrudiert. Der Lichtleiter 114 ist in dem Spalt 116 angeordnet und mit beiden Seiten des Spalts 116 verbunden. An einem ersten Ende des Lichtleiters 114 ist eine hier nicht dargestellte Lichtquelle angeordnet. An einem der ersten Ende gegenüberliegenden zweiten Ende des Lichtleiters 114 ist ein hier nicht dargestellter Lichtsensor angeordnet.

In einem Ausführungsbeispiel sind die Lichtquelle und der Lichtsensor am selben Ende des Lichtleiters 114 angeordnet. Dabei ist am zweiten Ende ein Reflektor angeordnet.

Die Lichtquelle ist ausgebildet, um Licht in den Lichtleiter 114 einzukoppeln. Das Licht wird an einer Grenzfläche des Lichtleiters 114 total reflektiert und zu dem Lichtsensor geleitet. Der Lichtsensor bildet eine eintreffende Lichtintensität in einem elektrischen Signal für die Detektionseinrichtung ab. Wenn das Extrusionsprofil 100 verformt wird, wird der Lichtleiter 114 ebenso verformt. Durch die Verformung wird das Licht an der Grenzfläche weniger reflektiert. Die am Lichtsensor ankommende Lichtintensität verringert sich. Die Änderung der Lichtintensität wird in dem Signal abgebildet.

**Fig. 11** zeigt eine Schnittdarstellung durch ein Extrusionsprofil 100 mit unterschiedlichen Schaltelementen 114 gemäß einem Ausführungsbeispiel. Eine Außenkontur des Extrusionsprofils 100 entspricht im Wesentlichen einem der in den vorhergehenden Figuren dargestellten Extrusionsprofilen. Zusätzlich weist das Extrusionsprofil 100 Schaltelemente 114 mit unterschiedlichen Sensorprinzipien auf. Dabei sind hier zwei elektrisch leitende, durch den Zwischenraum 116 voneinander beabstandete Kontaktflächen 114, wie in den Figuren 1 bis 5 gezeigt, neben einem den Zwischenraum 116 überbrückenden Lichtleiter 114 angeordnet, wie er anhand von Fig. 10 beschrieben ist. Diese Kombination zweier unterschiedlicher Sensorprinzipien ist lediglich beispielhaft gewählt. Beispielsweise können auch Schaltelemente 114 mit anderen Sensorprinzipien oder auch Schaltelemente 114 mit gleichem Sensorprinzip in einem Extrusionsprofil 100 kombiniert werden.

### BEZUGSZEICHENLISTE

- 100: Extrusionsprofil
- 102: Montageprofil
- 104: Tür
- 106: Montagebereich
- 108: T-Nut
- 110: Türspalt
- 112: Detektionseinrichtung
- 114: Schaltelemente
- 116: Zwischenraum
- 118: Übertragungseinrichtung
- 120: Rippen
- 122: Berührfläche
- 200: Abschlusswiderstand
- 202: Endkappe
- 300: Schnittschutzeinrichtung
- 302: Messer
- 400: dicker Metalldraht
- 402: dümmer Metalldraht
- 600: Schritt des Extrudierens
- 602: Schritt des Integrierens
- 604: Schritt des Ablängens
- 700: Fahrzeug
- 704: Türblatt
- 800: Spule

## Patentansprüche

1. Extrusionsprofil (100) für eine Tür (104) für ein Fahrzeug (700), wobei das Extrusionsprofil (100) aus einem Elastomermaterial mit zumindest einem durchgehenden Schaltelement (114) für eine Detektionseinrichtung (112) zum Detektieren einer Kompression des Extrusionsprofils (100) und einer durchgehenden Schnittschutzeinrichtung (300) gefertigt ist, wobei das Schaltelement (114) und die Schnittschutzeinrichtung (300) in das Extrusionsprofil (100) integriert ist und mit dem Extrusionsprofil (100) ablängbar ist, wobei die Schnittschutzeinrichtung (300) ein parallel zu dem zumindest einen Schaltelement (100) ausgerichtetes, in das Elastomermaterial eingebettetes Schnittschutzelement aufweist, und wobei das Schnittschutzelement in Bezug auf eine angenommene Schnittrichtung vor dem Schaltelement angeordnet ist, um das Schaltelement (100) zu schützen.

2. Extrusionsprofil (100) gemäß Anspruch 1, bei dem das Schaltelement (114) ein in einer Haupterstreckungsrichtung des Extrusionsprofils (100) ausgerichtetes optisches Reflektorelement und/oder ein in der Haupterstreckungsrichtung ausgerichteter Lichtleiter ist.

3. Extrusionsprofil (100) gemäß Anspruch 2, bei dem das Reflektorelement (114) anschließend an ein Extrudieren des Extrusionsprofils (100) in das Extrusionsprofil (100) eingebracht ist.

4. Extrusionsprofil (100) gemäß einem der vorhergehenden Ansprüche, bei dem das zumindest eine Schaltelement (114) und/oder die Schnittschutzeinrichtung (300) in das Elastomermaterial eingebettet ist und extrudiert ist.

5. Extrusionsprofil (100) gemäß einem der vorhergehenden Ansprüche, bei dem das Schaltelement (114) ein Tauchanker zum Eintauchen in eine Spuleneinrichtung (800) ist, wobei der Tauchanker (114) dazu ausgebildet ist, beim Eintauchen in die Spuleneinrichtung (800) ein Magnetfeld der Spuleneinrichtung (800) zu beeinflussen.

6. Extrusionsprofil (100) gemäß einem der vorhergehenden Ansprüche, mit zwei Schaltelementen (114) in Form von zwei in einer Haupterstreckungsrichtung des Extrusionsprofils (100) ausgerichteten elektrischen Leitern, die durch einen komprimierbaren Zwischenraum (116) voneinander beabstandet sind.

7. Extrusionsprofil (100) gemäß einem der vorhergehenden Ansprüche, bei dem das zumindest eine Schaltelement (114) Teil der Schnittschutzeinrichtung (300) ist.

8. Extrusionsprofil (100) gemäß einem der vorhergehenden Ansprüche, bei dem das zumindest eine Schaltelement (114) in einem Befestigungsbereich (106) des Extrusionsprofils (106) angeordnet ist.

9. Extrusionsprofil (100) gemäß einem der vorhergehenden Ansprüche, mit einer Übertragungseinrichtung (118), die zwischen einer Berührfläche (122) des Extrusionsprofils (100) und dem Schaltelement (114) angeordnet ist und dazu ausgebildet ist, eine Verformung der Berührfläche (122) auf das Schaltelement (114) zu übertragen.

10. Tür (104) für ein Fahrzeug (700), wobei die Tür (104) ein Türblatt (704) und ein an einer Kante des Türblatts (704) angeordnetes Extrusionsprofil (100) gemäß einem der vorhergehenden Ansprüche aufweist.

11. Verfahren zum Herstellen eines Extrusionsprofils (100) gemäß einem der vorhergehenden Ansprüche, wobei das Verfahren die folgenden Schritte aufweist:
Extrudieren (600) des Elastomermaterials zu dem Extrusionsprofil (100); und
Integrieren (602) des Schaltelements (114) und der Schnittschutzeinrichtung (300) in das Extrusionsprofil (100), wobei
die Schnittschutzeinrichtung (300) ein parallel zu dem zumindest einen Schaltelement (100) ausgerichtetes Schnittschutzelement aufweist, das in das Elastomermaterial eingebettet wird, und
wobei das Schnittschutzelement in Bezug auf eine angenommene Schnittrichtung vor dem Schaltelement angeordnet wird, um das Schaltelement (100) zu schützen.

12. Verfahren gemäß Anspruch 11, bei dem die Schritte (600, 602) des Extrudierens und des Integrierens zeitgleich ausgeführt werden, wobei das Schaltelement (114) und/oder die Schnittschutzeinrichtung (300) mit dem Elastomermaterial extrudiert wird.

13. Verfahren gemäß einem der vorhergehenden Ansprüche, bei dem im Schritt (602) des Integrierens das Schaltelement (114) und/oder ein weiteres Schaltelement (114) auf das Elastomermaterial aufgedampft wird.

14. Verfahren gemäß einem der vorhergehenden Ansprüche, mit einem Schritt (604) des Ablängens des Extrusionsprofils (100) auf eine gewünschte Länge, wobei das Schaltelement (114) und die Schnittschutzeinrichtung (300) mit dem Extrusionsprofil (100) auf die Länge abgelängt wird.

## Claims

1. An extruded profile (100) for a door (104) for a vehicle (700), the extruded profile (100) being made from an elastomeric material and having at least one continuous switch element (114) for a detection device (112) for detecting a compression of the extruded profile (100) and one continuous cut-protection device (300), the switch element (114) and the cut-protection device (300) being integrated in the extruded profile (100) and being trimmable to length with the extruded profile (100), the cut-protection device (300) having a cut-protection element that is aligned in parallel with the at least one switch element (100) and embedded in the elastomeric material and the cut-protection element being arranged upstream of the switch element in relation to a hypothetical direction of cutting in order to protect the switch element (100).

2. An extruded profile (100) according to claim 1, in which the switch element (114) is an optical reflector element aligned in a main direction of extension of the extruded profile (100) and/or a light conductor aligned in the main direction of extension.

3. An extruded profile (100) according to claim 2, in which the reflector element (114) is incorporated into the extruded profile (100) following extrusion of the extruded profile (100).

4. An extruded profile (100) according to any one of the preceding claims, in which the at least one switch element (114) and/or the cut-protection device (300) is/are embedded in the elastomeric material and extruded.

5. An extruded profile (100) according to any one of the preceding claims, in which the switch element (114) is a solenoid plunger for plunging into a coil device (800), the solenoid plunger (114) being designed to influence a magnetic field of the coil device (800) when plunged into the coil device (800).

6. An extruded profile (100) according to any one of the preceding claims, having two switch elements (114) in the form of two electrical conductors that are aligned in a main direction of extension of the extruded profile (100) and are separated by a compressible intermediate space (116).

7. An extruded profile (100) according to any one of the preceding claims, in which the at least one switch element (114) is part of the cut-protection device (300).

8. An extruded profile (100) according to any one of the preceding claims, in which the at least one switch element (114) is arranged in a fastening region (106) of the extruded profile (106).

9. An extruded profile (100) according to any one of the preceding claims, having a transmission device (118) that is arranged between a contact face (122) of the extruded profile (100) and the switch element (114) and designed to transmit a deformation of the contact face (122) to the switch element (114).

10. A door (104) for a vehicle (700), the door (104) having a door leaf (704) and an extruded profile (100) according to one of the preceding claims that is arranged on an edge of the door leaf (704).

11. A method for producing an extruded profile (100) according to any one of the preceding claims, the method comprising the following steps:
extrusion (600) of the elastomeric material to form the extruded profile (100); and
integration (602) the switch element (114) and the cut-protection device (300) into the extruded profile (100),
the cut-protection device (300) having a cut-protection element that is aligned in parallel to the at least one switch element (100) and embedded in the elastomer material and the cut-protection element being arranged upstream of the switch element in relation to a hypothetical direction of cutting in order to protect the switch element (100).

12. A method according to claim 11, in which the extrusion (600) and integration (602) steps are carried out simultaneously, the switch element (114) and/or the cut-protection device (300) being extruded with the elastomeric material.

13. A method according to any one of the preceding claims, in which the switch element (114) and/or a further switch element (114) are deposited onto the elastomeric material by evaporation during the integration step (602).

14. A method according to any one of the preceding claims, having a step (604) comprising the trimming of the extruded profile (100) to a desired length, the switch element (114) and the cut-protection device (300) being trimmed to the length with the extruded profile (100).

## Revendications

1. Profilé (100) d'extrusion pour une porte (104) d'un véhicule (700), le profilé (100) d'extrusion étant fabriqué en un matériau élastomère ayant au moins un élément (114) continu de circuit pour un dispositif (112) de détection, afin de détecter une compression du profilé (100) d'extrusion, et un dispositif (300) continu de protection vis-à-vis d'une coupe, l'élément (114) de circuit et le dispositif (300) de protection vis-à-vis d'une coupe étant intégré au profilé (100) d'extrusion et pouvant être mis à longueur avec le profilé (100) d'extrusion, le dispositif (300) de protection vis-à-vis d'une coupe ayant un élément de protection vis-à-vis d'une coupe incorporé dans le matériau élastomère et parallèle au au moins un élément (100) de circuit, et dans lequel l'élément de protection vis-à-vis d'une coupe est disposé, par rapport à une direction de coupe supposée, avant l'élément de circuit, afin de protéger l'élément (100) de circuit.

2. Profilé (100) d'extrusion suivant la revendication 1, dans lequel l'élément (114) de circuit est un élément optique réflecteur, dirigé dans une direction d'étendue principale du profilé (100) d'extrusion et/ou une fibre optique dirigée dans la direction d'étendue principale.

3. Profilé (100) d'extrusion suivant la revendication 2, dans lequel l'élément (114) réflecteur est introduit dans le profilé (100) d'extrusion à la suite d'une extrusion du profilé (100) d'extrusion.

4. Profilé (100) d'extrusion suivant l'une des revendications précédentes, dans lequel le au moins un élément (114) de circuit et/ou le dispositif (300) de protection vis-à-vis d'une coupe est incorporé dans le matériau élastomère et extrudé.

5. Profilé (100) d'extrusion suivant l'une des revendications précédentes, dans lequel l'élément (114) de circuit est un induit plongeur pour plonger dans un dispositif (800) à bobine, l'induit (114) plongeur étant constitué pour, lorsqu'il plonge dans le dispositif (800) à bobine, influer sur un champ magnétique du dispositif (800) à bobine.

6. Profilé (100) d'extrusion suivant l'une des revendications précédentes, comprenant deux éléments (114) de circuit sous la forme de deux conducteurs électriques dirigés dans une direction d'étendue principale du profilé (100) d'extrusion et à distance l'un de l'autre par un espace (116) intermédiaire pouvant être comprimé.

7. Profilé (100) d'extrusion suivant l'une des revendications précédentes, dans lequel le au moins un élément (114) de circuit fait partie du dispositif (300) de protection vis-à-vis d'une coupe.

8. Profilé (100) d'extrusion suivant l'une des revendications précédentes, dans lequel le au moins un élément (114) de circuit est disposé dans une partie (106) de fixation du profilé (106) d'extrusion.

9. Profilé (100) d'extrusion suivant l'une des revendications précédentes, comprenant un dispositif (118) de transfert, qui est disposé entre une surface (122) de contact du profilé (100) d'extrusion et l'élément (114) de circuit et qui est constitué pour transmettre une déformation de la surface (122) de contact à l'élément (114) de circuit.

10. Porte (104) d'un véhicule (700), la porte (104) ayant un vantail (704) de porte et un profilé (100) d'extrusion, suivant l'une des revendications précédentes, monté sur un bord du vantail (704) de la porte.

11. Procédé de fabrication d'un profilé (100) d'extrusion suivant l'une des revendications précédentes, le procédé ayant les stades suivants :
on extrude (600) le matériau élastomère en le profilé (100) d'extrusion ; et
on intègre (602) l'élément (114) de circuit et le dispositif (300) de protection vis-à-vis d'une coupe au profilé (100) d'extrusion,
dans lequel le dispositif (300) de protection vis-à-vis d'une coupe a un élément de protection vis-à-vis d'une coupe, qui est dirigé vers le au moins un élément (100) de protection vis-à-vis d'une coupe et qui est incorporé au matériau élastomère, et
dans lequel on met l'élément de protection vis-à-vis d'une coupe, par rapport à une direction de coupe supposée, avant l'élément de circuit, afin de protéger l'élément (100) de circuit.

12. Procédé suivant la revendication 11, dans lequel on effectue les stades (600, 602) de l'extrusion et de l'intégration en même temps, l'élément (114) de circuit et/ou le dispositif (300) de protection vis-à-vis d'une coupe étant extrudé avec le matériau élastomère.

13. Procédé suivant l'une des revendications précédentes, dans lequel, dans le stade (602) de l'intégration, on dépose en phase vapeur l'élément (114) de circuit et/ou un autre élément (114) de circuit sur le matériau élastomère.

14. Procédé suivant l'une des revendications précédentes, comprenant un stade (604) de mise à une longueur souhaitée du profilé (100) d'extrusion, dans lequel on met l'élément (114) de circuit et le dispositif (300) de protection vis-à-vis d'une coupe à longueur avec le profilé (100) d'extrusion.
